# EUROPEAN PATENT APPLICATION

(11) **EP 4 181 035 A1**
(43) Date of publication of application: **17.05.2023**
(21) Application number: 22202532.2
(22) Date of filing: 19.10.2022
(51) Int. Cl.: G06Q 10/00, G06Q 10/02, G06Q 10/06

(54) **A METHOD, APPARATUS AND COMPUTER PROGRAM FOR MANAGING BOOKING OF AN OFFICE RESOURCE**

(30) Priority: 10.11.2021 GB 202116129
(71) Applicant: Sony Network Communications Europe B.V., 2132LS Hoofddorp (NL)
(72) Inventor: PERSSON, Magnus, Basingstoke, RG22 4SB (GB)
(74) Representative: D Young & Co LLP

(57) **Abstract**

A method for managing booking of an office resource is described. The method comprises the steps of: receiving a booking schedule corresponding to reserving the office resource for a reservation period; predicting a feedback from the user in response to a notification requesting the user to release the office resource; and sending the notification to the user over the network based on the predicted feedback from the user. The method improves the mechanism of sending reminder notifications over the network so as to increase the success rate of getting positive response from the user to release the booking, whilst also reducing unnecessary network traffic and to minimize disturbance caused to the users.

## Description

### BACKGROUND

### Field of the Disclosure

The present technique relates to a method, apparatus and computer program for managing booking of office resources.

### Description of the Related Art

The "background" description provided herein is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present technique.

Booking systems that manage reservation of resources such as work spaces and meeting rooms in the office offer convenient ways for users, for example employees, to secure an office resource for the time they need it. Even if the office resource is not available, the employees are notified so that they can make alternative arrangement ahead. Booking systems could however result in waste of office resources in situations where employees arrive late to the resource; where employees leave the resource earlier than planned; and in some cases, where employees do not show up at all. Attempts have been made to address the problems in relation to resource reservation, for example, by clearly indicating in the booking system that a room is booked but currently unoccupied so that other employees may use it. However, the information may not be able to be passed in time to the employee who booked the room, and he or she would be greatly frustrated and disappointed when finding out the room is already occupied by another employee.

It is possible to mandate that all employees must confirm their room bookings by checking in to the room no later than a predetermined time period, for instance 15 minutes, after the meeting has started. Checking-in to all meetings does however create some stress on the employees that they have to remember to check-in in time to avoid being left without a room.

It is also possible to send notifications to the employee repeatedly over the network asking for early release of the booking. However, not all notifications will result in release of the booking and these notifications will cause unnecessary network traffic and in the meantime much annoyance to the users.

Accordingly, there exists a desire to improve the mechanism of sending reminder notifications over the network so as to increase the success rate of getting positive response from the user to release the booking, whilst also reducing unnecessary network traffic and to minimize disturbance caused to the users.

It is an aim of embodiments of the present disclosure to at least address this issue.

### SUMMARY

According to the disclosure, there is provided a method for managing booking of an office resource, comprising the steps of: receiving a booking schedule corresponding to reserving the office resource for a reservation period; predicting a feedback from the user in response to a notification requesting the user to release the office resource; and sending the notification to the user over the network based on the predicted feedback from the user.

The foregoing paragraphs have been provided by way of general introduction, and are not intended to limit the scope of the following claims. The described embodiments, together with further advantages, will be best understood by reference to the following detailed description taken in conjunction with the accompanying drawings.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 describes a booking management system for office resources according to embodiments of the disclosure;
Figure 2 describes a booking server according to embodiments of the disclosure;
Figure 3 describes a user device according to embodiments of the disclosure;
Figure 4 describes an exemplary office configured to utilize the booking management system of Figure 1;
Figure 5 describes a database entry for office resources and various users according to embodiments of the disclosure;
Figures 6A and 6B describe user interfaces of the user device of Figure 3 for notifying the user to release a booking early;
Figure 7 describes a late check-in scenario that may be encountered by the booking management system according to embodiments of the disclosure;
Figure 8 shows a flow chart describing a notification process implemented by the booking management system according to embodiments of the disclosure for handling the scenario of Figure 7;
Figure 9 describes an early leave scenario that may be encountered by the booking management system according to embodiments of the disclosure;
Figure 10 shows a flow chart describing a notification process implemented by the booking management system according to embodiments of the disclosure for handling the scenario of Figure 9;
Figure 11 describes a temporary leave scenario that may be encountered by the booking management system according to embodiments of the disclosure;
Figure 12 shows a flow chart describing a notification process implemented by the booking management system according to embodiments of the disclosure for handling the scenario of Figure 11;
Figure 13 describes an exemplary database for training the machine learning algorithm according to embodiments of the disclosure;
Figure 14 describes an exemplary neural network of the machine learning algorithm according to embodiments of the disclosure; and
Figure 15 describes an exemplary decision tree of the machine learning algorithm according to embodiments of the disclosure; and
Figure 16 shows a flow chart describing a booking management process according to embodiments of the disclosure.

### DESCRIPTION OF THE EMBODIMENTS

Referring now to the drawings, wherein like reference numerals designate identical or corresponding parts throughout the several views.

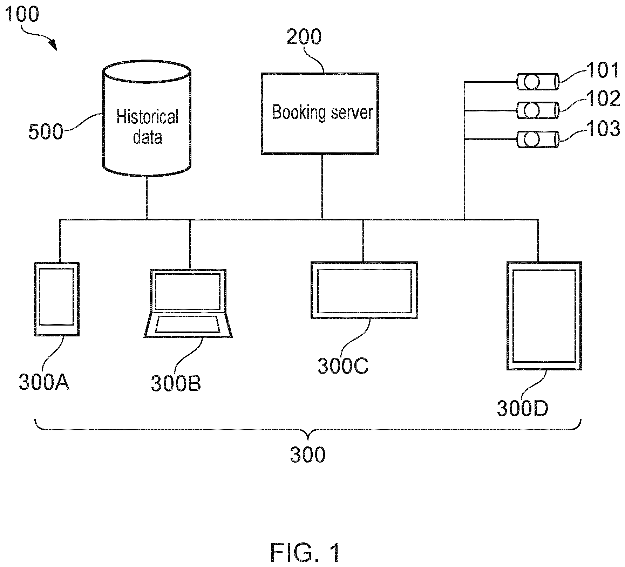

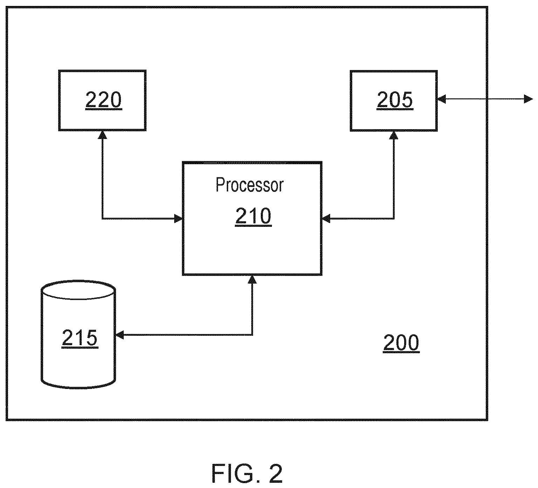

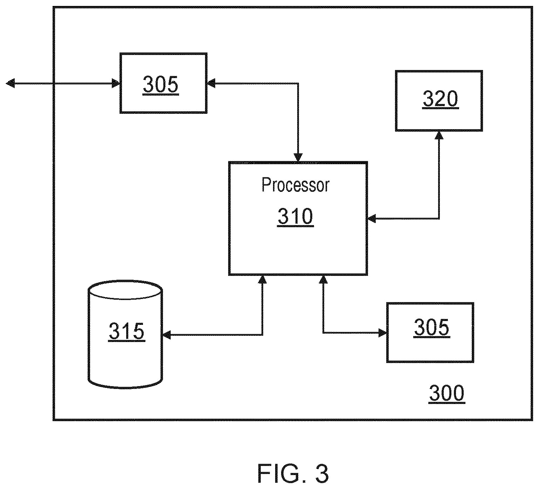

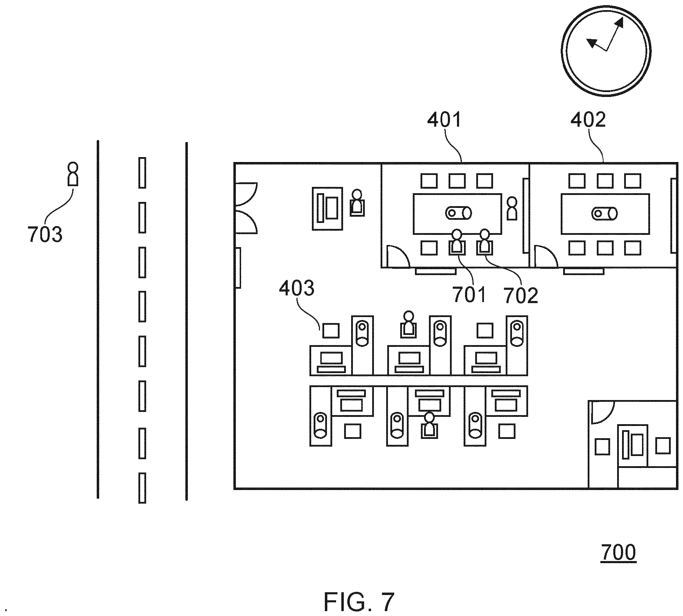

Figure 1 is a schematic block diagram illustrating a booking management system 100 for office resources according to embodiments of the present disclosure. The booking management system 100 may include a booking server 200, user devices 300, and sensors 101-103, each of which may be connected to one another via wired or wireless connection. The booking server 200 maintains a booking database and acquires user requests for booking and managing office resources, which will be further described in Figure 2. The office resources managed by the booking management system 100 may include meeting rooms, work spaces, collaboration areas, phone booths, laboratory benches, resting rooms, staff break rooms, reception areas and other facilities shared by users in the office. User devices 300 may include mobile devices 300A, computer workstations 300B, digital room panels 300C, digital floorplan panels 300D and the like. User devices 300 allow users to access the resource management system 100 to make new bookings of office resources and manage existing bookings, including rescheduling and cancelling the bookings. Mobile devices 300A may be smartphones or tablet devices which can be carried around by the users. Digital room panels 300C may be installed outside the meeting rooms to allow the users to check in or check out the office resources, to enquire the planner of the meeting room, or to check the current or future booking status of the meeting room. Digital floorplan panels 300D may be installed at the entrance of the office to provide users, including staff and visitors of the office, with location information and booking status of the relevant office resources. The configuration of user devices 300 will be further described in Figure 3. The sensors 101-103 may be installed at each of the office resources for detecting the presence of a user who is using the facility. In embodiments, at least one camera may be installed for an office resource or a group of office resources, such as a camera mounted in the ceiling covering multiple workstations for detecting the presence of users at the workstations. The booking management system 100 may further include a historical data storage 500 for storing historical data collected from booking server 200, user devices 300 and sensors 101-103. The stored historical data may be used to perform statistical analysis or train machine learning algorithms 220 for predicting user feedback, which will be described later with reference to Figures 7-15. Although Figure 1 shows only 3 sensors and 4 user devices, any numbers of sensors and user devices is envisaged.

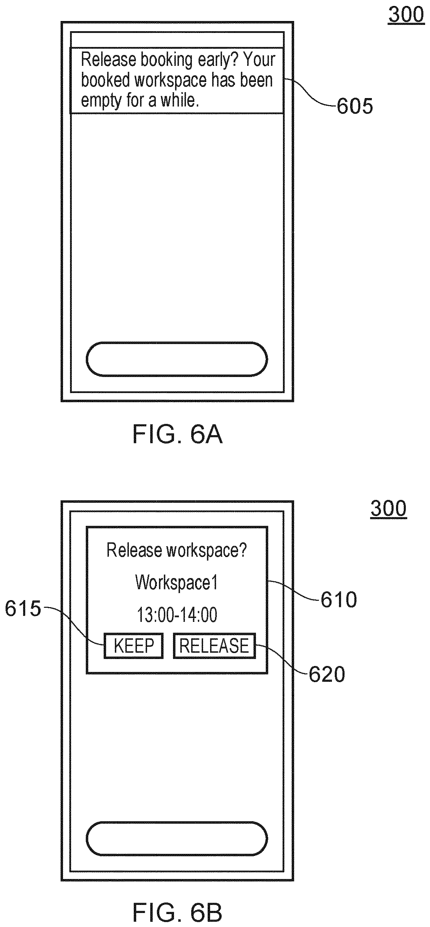

Figure 2 shows a booking server according to embodiments of the present disclosure. The booking server 200 comprises a server processor 210. The server processor 210 is embodied as processing circuitry such as a microprocessor or an Application Specific Integrated Circuit or another circuit design and controls the operation of the booking server 200 using a computer program which is embodied as software code. The booking server 200 is controlled by the server processor 210 to perform embodiments of the disclosure. Server storage 215 is connected to the server processor 210 and stores thereon computer-readable instructions which control the server processor 210. In addition, the server storage 215 also includes an Office Resource Database and a User Database as will be explained later with reference to Figure 6. The server storage 215 is, in embodiments, either a magnetically readable storage medium or a solid state storage medium but the disclosure is not limited. For example, the server storage 215 may be located outside of the server and may be connected to the server via a network or may be located on the cloud. The server processor 210 may implement a machine learning algorithm, or a combination of machine learning algorithms, to manage the booking of office resources and particularly handling the notification process. In embodiments of the present disclosure, the booking server 200 implements machine learning algorithms 220 to predict the likelihood that a notification reminding a user to release a resource will successfully result in release of the office resource. In some embodiments, the booking server 200 implements machine learning algorithms 220 to predict the likelihood that a notification reminding a user to release a resource will result in confirmation that the office resource is needed and the booking needs to be kept. In alternative embodiments, the booking server 200 implements machine learning algorithms 220 to predict the likelihood that a user only temporarily leaves an office resource and therefore a reminder notification is not required to be sent. The machine learning algorithms may include predictive models such as artificial neural networks, decision tree models, linear regression models, or other models for classification and regression analyses.

Additionally connected to the server processor 210 is server communication circuitry 205. Server communication circuitry 205 connects the booking server 200 to a network. The network to which booking server 200 is connected via server communication circuitry 205 may be a wide area network, such as the Internet, or may be a Local Area Network or the like. The purpose of the server communication circuitry 205 is to send and receive data from various user devices 300 over the network that are explained with reference to Figure 3. The server communication circuitry 205 will communicate with sensors 101-103 or cameras mounted at each office resource indicating the presence of a user at the office resource as will be described later.

Additionally connected to the server processor 210 is one or more machine learning algorithms 220. Machine learning algorithms 220 may be trained by historical data stored in historical data storage 500 which is collected from the booking server 200, user devices 300 and sensors 101-103. The machine learning algorithm 220 assists the server processor 210 in predicting user feedback based on the historical data and current conditions, which will be described later with reference to Figures 7-15.

Figure 3 describes a user device according to embodiments of the disclosure. The user device 300 is controlled by a device processor 310. The device processor 310 may be embodied as a microprocessor or an Application Specific Integrated Circuit or other processing circuitry. The device processor 310 operates in accordance with computer readable software code that is located on device storage 315. Device storage 315 may be embodied as solid state storage medium or a magnetically readable storage medium. Alternatively, device storage 315 may be located remotely to the user device 300 such as being located on the cloud and may be accessible over the internet. Other data such as a Unique ID for the user device 300 and various user profiles are also stored on device storage 315.

Additionally connected to the device processor 310 is device communication circuitry 305. The purpose of the device communication circuitry 305 is to allow the user device 300 to communicate with another device over a network or in a point-to-point relationship. The device communication circuitry 305 may therefore connect the user device 300 to another user device 300 or the booking server 200 over a network connection. Specifically, it is envisaged that the user device 300 will be a device that connects to the booking server 200 over a network such as a Local Area Network or a Wide Area Network.

Additionally connected to device processor 310 is a device interface 320. The purpose of the device interface 320 is to allow a user to interact with the user device 300. For example, a user may wish to interact with the user device 300 using a touch screen. In this case, the device interface 320 may be a touch screen such as a capacitive touch screen or a resistive type touch screen.

Finally, device positioning circuitry 325 is connected to device processor 310. The device positioning circuitry 325 may use low power Bluetooth positioning that uses BLE beacons located around a building. Of course the disclosure is not so limited and the device positioning circuitry 325 may use a Global Positioning System (GPS) receiver allowing the exact location of the user device 300 to be determined. Specifically, the user device 300 may be located using its position within a wireless network using information derived from the device communication circuitry 305. Alternatively, or additionally, the device processing circuitry 325 may use a bespoke mechanism to determine the location of the user device 300 to a specific level of accuracy.

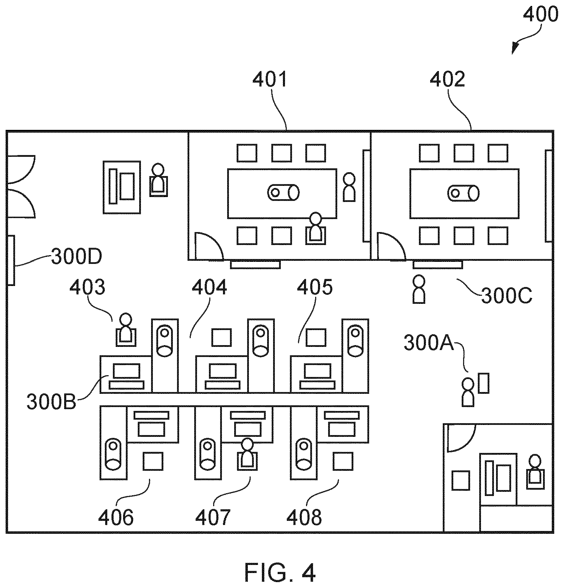

Figure 4 depicts an exemplary office plan configured to utilize the booking management system 100 of Figure 1. The office plan 400 includes shared resources available for booking, such as meeting rooms 401-402, and work spaces 403-408. Each user in the office may carry a mobile device 300A with them.

Each of the work spaces 403-408 may contain a computer workstation 300B. Each of the meeting rooms 401-402 has a digital room panel 300C installed next to the room entrance. The office plan further includes a digital floorplan panel 300D at the office entrance. These mobile device 300A, computer workstation 300B, digital room panel 300C, and digital floorplan panel 300D may serve as a user device 300 for accessing the booking management system 100. Although Figure 4 shows 2 meeting rooms and 8 work spaces on a single floor managed by the booking management system 100, any number of meeting rooms and work spaces in multiple floors and multiple buildings is envisaged.

It should also be noted that meeting rooms 401-402, work spaces 403-408 are exemplary types of office resources that can be managed by the booking management system 100. Staff break rooms, reception areas, collaboration areas, phone booths, laboratory benches, resting rooms or the like are also examples of office resources that can be shared and booked by staff and visitors. For the purpose of embodiments of the disclosure however, meeting rooms and work spaces will be described, although the disclosure itself is not so limited.

Additionally provided in the office plan 400 are a number of sensors 101-103. The sensors 101-103 may be mounted underneath the meeting desks or work space desks and, in embodiments, comprise an Infra-Red sensor. The purpose of the sensors 101-103 is to detect the presence of the users at the work resources, such as sensing the users sitting at the desks of the meeting rooms 401-402 or the work spaces 403-408. Therefore, the sensors 101-103 are mounted such that a user sitting in a chair of the meeting rooms 401-402 or the work spaces 403-408 will be detected. This means that the sensors 101-103 may comprise a microwave sensor or an Infra-Red sensor. The sensors 101-103 may be mounted above every seating position according to embodiments of the disclosure. In alternative embodiments, one or more sensors may be positioned elsewhere in other positions of the meeting room and work space, such as at the entrance of the meeting rooms 401-402 or over the desks of the meeting rooms 401-402 and work spaces 403-408, to achieve the result of detecting one or more users using the office resource.

It may be also desirable to detect the movement of a person moving in the meeting rooms 401-402 and work spaces 403-408 to avoid false detection due to background Infra-Red or microwave source. The sensitivity of the movement sensor may be set to detect very small movements of people in the meeting rooms 401-402 and work spaces 403-408. This is because it is typical for people to perform very little movement during meetings and when working in work space so in order to detect the presence of a user in the meeting rooms 401-402 and work spaces 403-408, very small movements should be detected. An example would be that the sensors 101-103 should be sensitive enough to detect a person moving a hand by 5cm.

In embodiments, door sensors may be installed to detect whether a user is walking through the doorway of the meeting rooms 401-402, or whether the doors of meeting rooms 401-402 are closed, which may provide additional information for the booking management system 100 to determine whether the meeting rooms 401-402 are occupied.

Although only one sensor is shown in Figure 4 to be installed at each of the meeting rooms 401-402 and work spaces 403-408, the disclosure is no way limited to this. In fact, a plurality of sensors may be provided depending upon the layout of the meeting rooms 401-402 and work spaces 403-408 as would be appreciated.

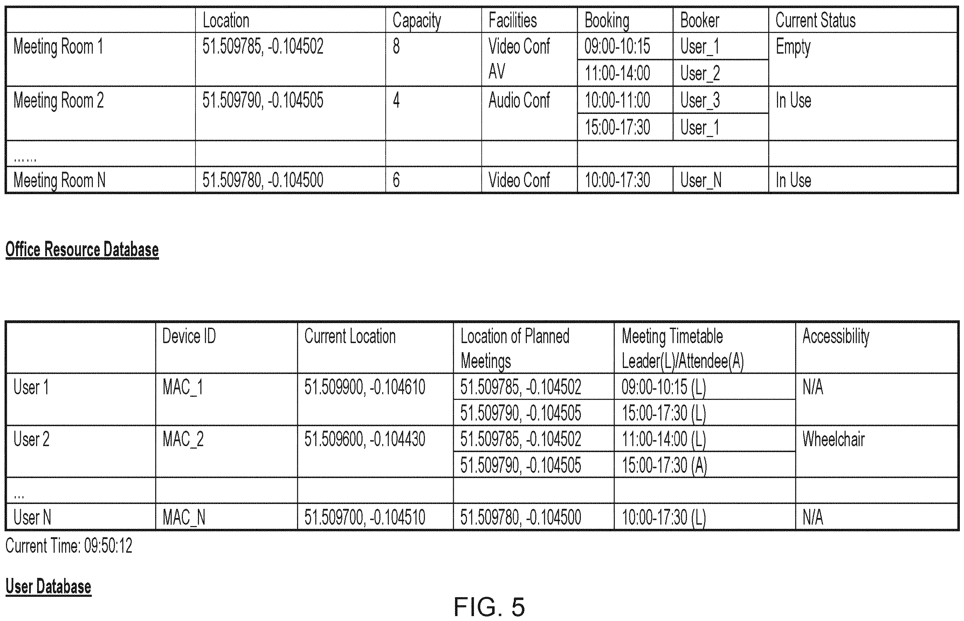

Figure 5 illustrates a data structure which is, in embodiments, a database. The database is shown as two separate databases (an Office Resource Database and a User Database), but the disclosure is not so limited and a single database may be provided. The data structure is stored in the server storage 215 of the booking server 200.

Referring to the Office Resource Database, a number of parameters associated with each office resource are stored in correspondence with the office resource. In particular, the location of each office resource is stored in correspondence with the office resource. The location may be the GPS co-ordinates which provide the global position and the floor number of the office resource. Of course, other position information defining the location of the office resource is envisaged. The purpose of storing the location of each office resource is to establish where each user is relative to the office resource, thereby determine whether to send a notification to remind for release of the office resource as will be explained later.

The capacity of the office resource, for instance a meeting room, is also stored in correspondence with the office resource. The purpose of storing the capacity of each office resource is to determine whether to send a notification to remind for release of the office resource as will be explained later.

The facilities of the office resource are also stored in correspondence with the office resource. The purpose of storing the facilities of each office resource is to determine whether to send a notification to remind for release of the office resource as will be explained later.

The timetable of bookings for each office resource is also stored in correspondence with the office resource. The purpose of storing the bookings is to determine whether to send a notification to remind for release of the office resource as will be explained later. The user who booked the office resource is also stored. In some embodiments, the list of participants who will be using the office resource is also stored with the timetable. In alternative embodiments, where a user books the office resource on behalf of the organizer, although the user may not be the actual participant of the relevant event, the role information of the user, for instance as the personal assistant of the organizer, is also stored. The role information can be derived from, for example, the preferences or information in the user profile settings, or the information about whether the party is an optional attendee or a required attendee of the event. Notifications may be sent to at least one of the parties according to user preferences: the organizer, the person booking on behalf of the organizer, other participants of the event, and other relevant users. Of course, although the resource booking information is stored within the database, the disclosure is not so limited. Specifically, the resource booking information may be retrieved from another resource booking system or other databases as would be appreciated.

Finally, the current status of the office resource is stored in correspondence with the office resource. This status defines whether the office resource is in use or unoccupied. In order to determine the current status, the output from each of the sensors 101-103 is analysed. In particular, if a sensor is activated, it can be assumed that the user is using the corresponding office resource. In embodiments, at least one camera is installed for an office resource or for a group of office resources for detecting the presence of users. Additionally, the images acquired by the camera may be analysed by image recognition algorithms to recognize the presence of the users, and/or their belongings at the workstation. A more accurate prediction about whether the user has ended the reservation may be estimated by the booking management system 100 based on the information of the presence of the users and their belongings. For instance, when the user is not present at the workstation but have left his or her computer, jacket, or bag at the workstation, it may be predicted that the user has not finished using the workstation.

Referring to the User Database, the device associated with each user is stored in association with the user. In embodiments, this may be the Media Access Control (MAC) address of the user device 300 which is stored within the device storage 315 in user device 300. Alternatively, any kind of unique device identifier stored within the user device 300 is envisaged. The purpose of the unique device identifier is to associate the user device 300 communicating with the booking server 200 with a particular user account for the booking management system 100. Although the foregoing describes associating one user device 300 with one user, the disclosure is not so limited. For example, a plurality of user devices 300 may be associated with one user. This would allow a user to have a plurality of user devices 300 such as a laptop computer, tablet computer and mobile telephone associated with them.

The current location of the user device 300, and thus the user, is also stored in association with the user. The current location may be provided by the device positioning circuitry 325 and communicated to the booking server 200 by the device communication circuitry 305. As will be appreciated, the format of the current location may be any format and will typically depend upon the type of positioning system used by the device positioning circuitry 325. For example, the positioning information may be a local co-ordinate system used by the BLE beacons. Of course, other positioning information such as WGS84 (GPS) co-ordinates may be used. It is noted that any positioning information is envisaged.

The location of reserved resource and reservation time are stored in association with the user. Although the location of reserved resource is shown as GPS co-ordinates, the disclosure is not so limited. However, by providing the location of the reserved resource in the same format as the current location, it is possible to identify is the user is using the resource or is close to a meeting. This means that the user may be easily tracked down in the event that a user is late for checking in a resource.

In addition, for each meeting, it is noted in the User Database whether the user is an organiser of the meeting or is an attendee. This is marked in Figure 5 by either an "O" or an "A".

Finally, for each user, any accessibility considerations are noted. For example, if the user is in a wheelchair, then wheelchair access to the office resource is important or if the user wears a hearing aid, an induction loop may be required. This information may assist in determining whether to send a notification to remind for release of the office resource.

Figures 6A and 6B shows user interfaces of the user device of Figure 3 for notifying the user to early release a booking. When the booking management system 100 determines to send a notification over the network to the user asking for early release of an office resource, the booking server 200 sends a command through the server communication circuitry 205 to the device communication circuitry 305 of the user device 300. The device processor 310 then instructs device interface 320 to display a message 605. According to embodiments of the present disclosure, the message 605 notifies the users that the booked work space has been unoccupied for a while and asks for early release of the booking. The message may disappear after a predetermined time period, for instance 5 seconds, if the user ignores it. If the user attends to the message 605, he or she may tap on the message and the user device 300 responds by displaying at the device interface 320 a more detailed message 610, which provides the booking details such as name and location of the booked work space and the booking period. In some embodiments, if another user has also requested to use the office resource, for instance, because he notes that the office resource is unoccupied, this another user can make such request via the booking management system 100 which may then place him or her on a waiting list. The message 605 or the detailed message 610 sent to the organizer who initially booked the office resource may provide information about another user having requested to use the office resource, such as the name, rank, department, or organization of this another user, which may help the organizer make the decision whether to release the office resource. In particular, the message 605 or the detailed message 610 may contain information including one or more of the followings:
- the reservation period for the office resource;
- the time the office resource has been unoccupied;
- attendees that will also use the office resource;
- identification such as name of the office resource;
- location of the office resource;
- type of the office resource; and
- the information about another user having requested for release of the resource.

The user is asked to provide feedback to the notification such as to respond by tapping on user interface elements such as buttons 615, 620 to either keep the booking or release it early. In some embodiments, the user feedback may include one or more of the followings:
- keep the booking;
- release the booking;
- ignore the notification;
- keep the booking for a predetermined period of time;
- release the booking after a predetermined period of time;
- request to send notification again after a predetermined period of time; and
- request not to send further notifications

Figure 7 illustrates a late check-in scenario that may be encountered by the booking management system 100 according to embodiments of the disclosure. Users 701 and 702 booked a meeting room 401 for 10:00 a.m. However, they are still in another urgent meeting with their supervisor in meeting room 402 and therefore cannot use the meeting room 401 yet. On the other hand, user 703 booked a work space 403 for 10:00 a.m. but he or she is out of office visiting clients and habitually forgets to cancel the booking. At 10:05 a.m., users 701, 702 and 703 still have not checked in the resource, and the resource management system 100 needs to determine whether to send notifications to users 701, 702, and 703 over the network to ask for early release of the meeting room 402 and work space 403.

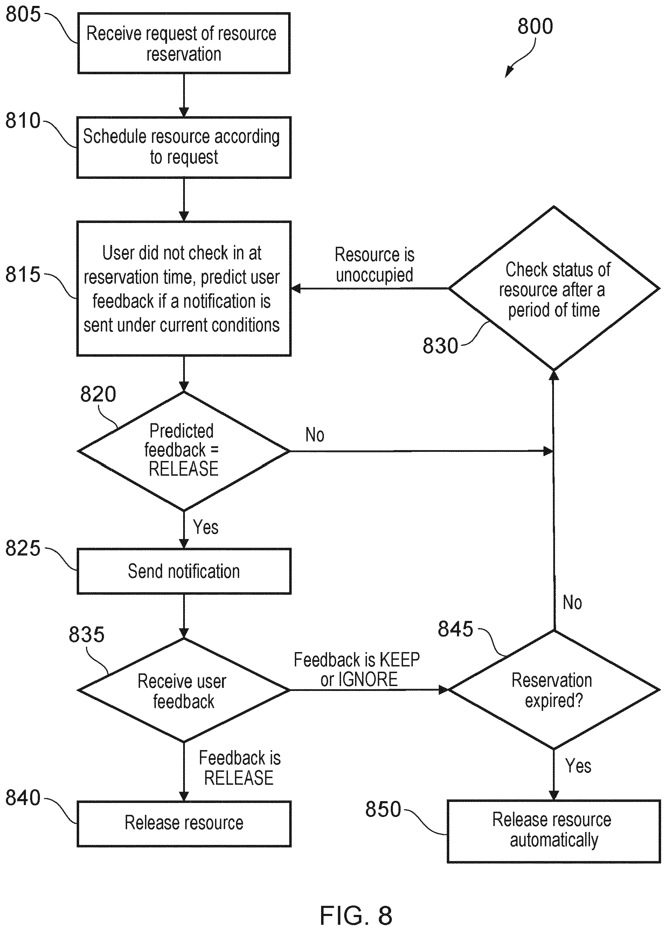

Figure 8 illustrates a flow chart describing a notification process implemented by the booking management system 100 according to embodiments of the disclosure for handling the scenario of Figure 7. The process 800 starts in step 805. The process 800 will be started by a user initiating a booking feature of the software application stored in the device storage 315.

It should be noted here that the user may book an office resource at a specific future time, or in embodiments, may book an office resource for an ad-hoc purpose. When booking a group facility such as a meeting room, the user (who will be the organiser of the booking) will identify a list of attendees of the meeting. This may be one or more further attendee. This list of attendees may be taken from a contact list within the user device 300. For example, the user may select the attendees from a drop down list of contacts. Of course, the disclosure is not so limited and no further attendees may be invited. For example, the user may book the meeting room for their own use only.

When booking the office resource, the user will also define the facilities required for the office resource. For example, in the case of a meeting room, the user may specify that video conference facilities, audio conference facilities or the like are required. The required facilities may also be predefined for user. For example, if the user has mobility issues such as being in a wheelchair, a facility required of the meeting room is that it must have wheelchair accessibility. Similarly, in the event that the user wears a hearing aid, the meeting room should include an induction loop.

A request for booking which in embodiments includes the list of attendees and the list of required facilities is sent by the user device 300 and is received by the booking server 200 over the network. Of course, as noted above, it is possible that no other attendees will be present at the meeting, for example, if the organiser just requires the meeting room to make a private call or the like.

The process then moves to step 810 where the resource is scheduled according to the request. The Office Resource Database and the User Database are updated. Specifically, the office resource will be booked for the predetermined time. This time period may be defined by the user when arranging the adhoc meeting or may be a default value. The default value may be 15 minutes for example although longer and shorter periods are naturally envisaged.

The process then moves to step 815 where the reservation time has arrived but the office resource remains unoccupied, based on information such as the user did not check in on the room panel and/or the sensors did not detect the presence of the user at the resource. The booking server 200 needs to determine whether to send a notification to the organizer over the network reminding him to release the resource early. The decision process involves predicting the likelihood that sending the notification to the user in the given situation will result in a response to release the resource. The prediction can be performed by taking account of the historical data of user feedback and conditions stored in historical data storage 500. For instance, the booking server may predict that users 701 and 702 are likely to ignore a notification based on the location information of the users which is another meeting room 402, implying the users are in meeting and prefer not to be disturbed. In the example of user 703, the booking server may predict that a notification will successfully remind the user to release the work space, based on his or her current location which is far from the office and also the habit of forgetting to cancel a booking in advance.

In embodiments of the present disclosure, statistical analysis can be performed on the historical data to obtain the average wait time that the user released previous bookings. If the current wait time is longer than the average time, it will be predicted by the booking server 200 that sending a notification will successfully cause the user to release the resource. In embodiments of the disclosure, apart from the time the resource has been unoccupied, the booking server 200 may also consider other factors listed below, although the disclosure is not so limited:
- the time the resource has been used since reservation period started;
- the number of users that will use the resource;
- the day and time of day for the reservation;
- location of the resource;
- type of the resource;
- metadata associated with the resource;
- capacity of the office resource;
- accessibility considerations;
- priority of the usage of the resource;
- organization the user belongs to;
- role of the user in the organization;
- whether virtual meeting is being held;
- the number of times and durations the resource has been made unoccupied previously during the current reservation time;
- the location of the user at the time when the current notification was sent, which may be contextual location information such as in another meeting room, in a coffee area, in a restroom area);
- the location of the user at the time when the previous notification was sent;
- the distance of the user from the resource when the current notification was sent;
- the moving direction of the user with respect to the resource when the current notification was sent, for example, moving away from, moving towards or being stationary;
- the state of the user's devices when the current notification was sent, for instance, screen on, screen off, active application, or on a call;
- the feedback received from the user in response to the current notification;
- the feedback received from the user in response to the previous notification; and
- the information about another user having requested for release of the resource.

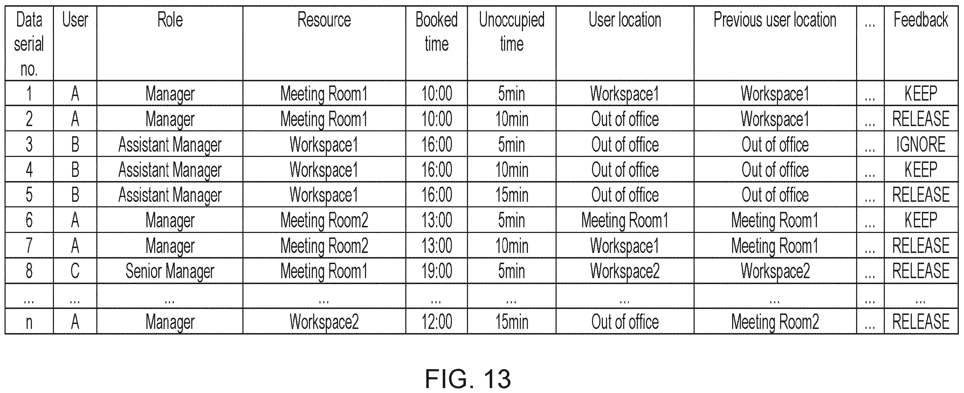

Since the correlation between these factors and the outcome (user feedback in response to the notification) is complicated, it will be very challenging and inefficient for the programmer to work out the correlation and describe it in programming language. It is also difficult for the programmer to keep track of the new data obtained during ongoing operation and to fine tune the correlation and improve the performance of the program. According to embodiments of the present disclosure, the booking server 200 adopts machine learning algorithms 220 which are able to learn from the historical data and predict the outcome. The machine learning algorithms 220 will also be able to continuously improve the accuracy and efficiency of the predicted outcome with training by subsequent data acquired through ongoing operation. In embodiments, the machine learning algorithms 220 may be classification algorithms which estimate the outcome, that is the predicted user feedback in response to a notification sent under the given conditions. Alternatively, the machine learning algorithms 220 may output a probability or score of a user feedback such as an instruction to release booking, the booking management system 100 may subsequently compare the score with a predetermined threshold value to determine whether to send a notification under that circumstance. The threshold values may be assigned with a default value. For instance, for an output score within the range of 0 and 1, the threshold value may have a default value 0.5. The threshold values may be further fine-tuned based on various factors including the characteristics of the relevant users and resources. Further details of the machine learning algorithms 220 will be described with reference Figures 13-15.

The process then moves to step 815 where the predicted user feedback in response to a notification sent under the current conditions is obtained. In the event that the predicted user feedback is to keep the booking, or to ignore the notification, the process moves to step 830 where the booking server 200 will check again the status of the resource after a predetermined period of time. If the user still has not checked in the resource, the process moves to step 815 where another prediction of the user feedback based on the updated conditions, for example, the new wait time and new user location.

Returning to step 820, in the event that the predicted user feedback is to release the booking, the process proceeds to step 825 where the booking server 200 sends the notification over the network to ask the user whether he or she would like to keep or release the booking.

The process then moves to step 835 where feedback is received from the user device 300 over the network in response to the notification. In the event that the feedback is to release the booking, the process proceeds to step 840 and the booking server 200 will release the resource and update its Office Resource Database and User Database. The user feedback and corresponding conditions under which the notification was sent will be stored in historical data storage 500.

Returning to step 835, in the event that the feedback is to keep the booking or the notification is ignored by the user, the user feedback and corresponding conditions under which the notification was sent will be stored in historical data storage 500. The process then moves to step 845 where the booking server 200 checks whether the reservation period has expired. In the event that the reservation has expired, the process moves to step 850, where the booking server 200 automatically releases the resource. In alternative embodiments, in step 845, the booking server 200 checks additionally whether a predetermined period of time, for example 20 minutes, has passed since the resource has been unoccupied. If the predetermined period of time has passed, the booking system releases the resource automatically even the reservation period has not expired.

In embodiments, the process determines in step 835 whether the user responds to keep the booking, in which case the process proceeds to step 845. If the process determines in step 1050 that the user responds to release the resource or to ignore the notification, the process proceeds to step 840 where the booking server 200 will release the resource immediately or after a predetermined period of time.

Returning to step 845, in the event that the reservation period has not expired, the process moves to step 830. In step 830, as already described above, the booking server 200 checks again the status of the resource after a predetermined period of time. If the user still has not checked in the resource, the process moves to step 815 where another prediction of the user feedback based on the updated conditions, for example, the new wait time and new user location.

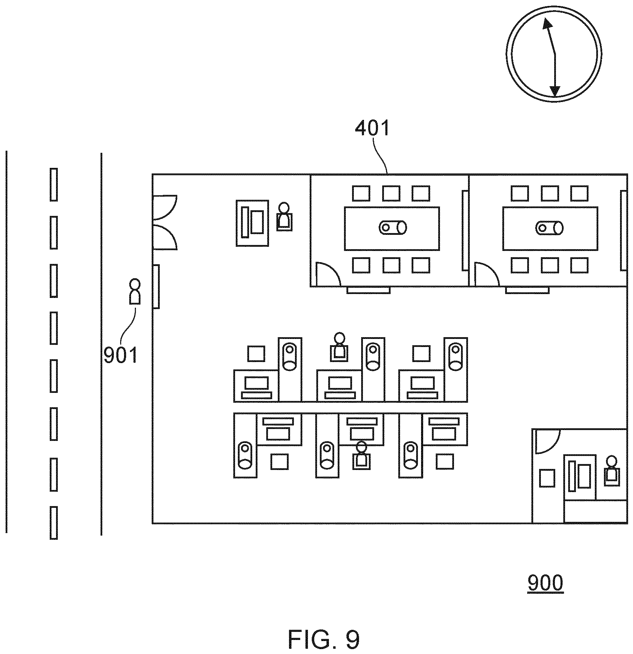

Figure 9 illustrates an early leave scenario that may be encountered by the booking management system 100 according to embodiments of the disclosure. User 901 booked a meeting room 401 for the period 10:00 a.m. to 12:00 p.m. The meeting finished early and user 901 left the meeting room 401 at 11:30 a.m. without check-out. At 11:35 a.m., the resource management system 100 detects through the sensors 101-103 that the meeting room has become unoccupied and determines whether to send notifications over the network to user 901 to ask for early release of the meeting room 401.

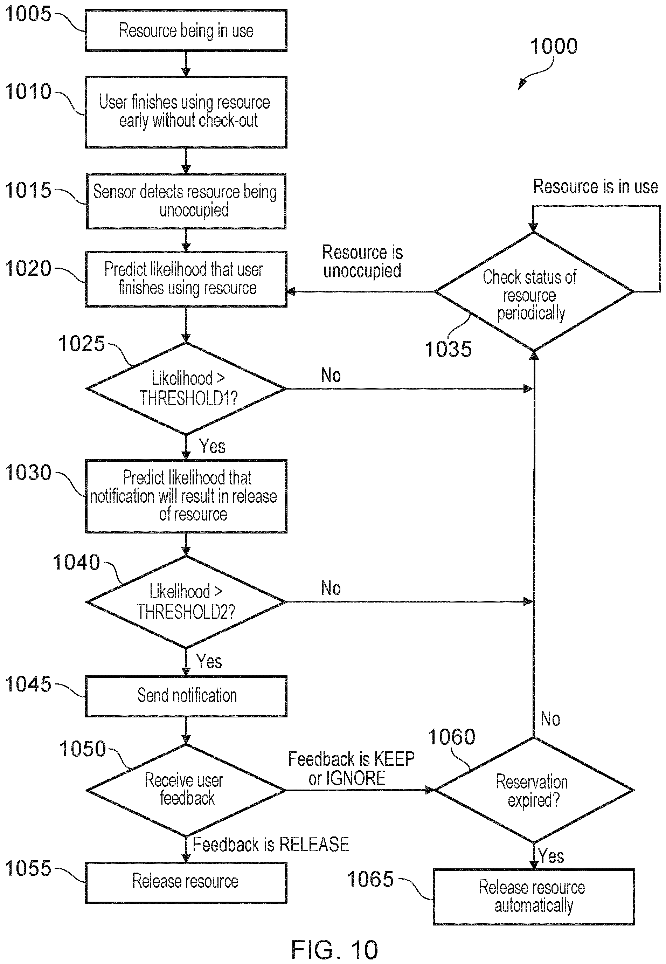

Figure 10 illustrates a flow chart describing a notification process implemented by the booking management system 100 according to embodiments of the disclosure for handling the scenario of Figure 9. The process 1000 starts in step 1005. The process 1000 will be started by a user initiating a booking feature of the software application stored in the device storage 315. A request for booking is sent by the user device 300 and is received by the booking server 200 over the network. The resource is then scheduled according to the request. The Office Resource Database and the User Database are updated. Specifically, the office resource is booked for the predetermined time.

The process then moves to step 1010 where the reservation time has arrived and the user 901 checks in the resource. The user 901 then finishes using the resource early but forgets to check out. The process moves to step 1015 where the sensors 101-103 of the booking management system 100 detects the resource is unoccupied. The booking server 200 needs to determine whether to send a notification to the organizer reminding him to release the resource early.

The decision process involves predicting in step 1030 the likelihood that sending the notification to the user 901 in the given situation will result in a response to release the resource. According to embodiments of the disclosure, the decision process further includes firstly predicting the likelihood that the user 901 has finished using the resource, which is performed in step 1020.

The foregoing prediction can be performed by taking account of the historical data of user feedback and conditions stored in historical data storage 500. In the example of user 901, the booking server may predict that a notification will successfully cause the user to release the work space, based on his or her current location which is moving away from the office and also the habit of forgetting to check out a work space after use.

In embodiments of the present disclosure, statistical analysis can be performed on the historical data to obtain the average wait time that the user 901 released previous bookings. If the current wait time is longer than the average time, it will be predicted by the booking server 200 that sending a notification will successfully cause the user 901 to release the resource. In another example of the embodiments, the average duration that the user 901 temporarily left a resource without actually finishing the use of the resource may be obtained to predict whether the user 901 in the current situation has finished using the resource. In alternative embodiments of the disclosure, apart from the time the resource has been unoccupied and the duration of temporarily leaving the resource, the booking server 200 may also consider other factors listed below, although the disclosure is not so limited:
- the time the resource has been used since reservation period started;
- the number of users that will use the resource;
- the day and time of day for the reservation;
- location of the resource;
- type of the resource;
- metadata associated with the resource;
- capacity of the office resource;
- accessibility considerations;
- priority of the usage of the resource;
- organization the user belongs to;
- role of the user in the organization;
- whether virtual meeting is being held;
- the number of times and durations the resource has been made unoccupied previously during the current reservation time;
- the location of the user at the time when the current notification was sent, which may be contextual location information such as in another meeting room, in a coffee area, in a restroom area);
- the location of the user at the time when the previous notification was sent;
- the distance of the user from the resource when the current notification was sent;
- the moving direction of the user with respect to the resource when the current notification was sent, for example, moving away from, moving towards or being stationary;
- the state of the user's devices when the current notification was sent, for instance, screen on, screen off, active application, or on a call;
- the feedback received from the user in response to the current notification;
- the feedback received from the user in response to the previous notification; and
- the information about another user having requested for release of the resource.

Since the correlation between these factors and the outcome (user feedback in response to the notification) is complicated, it would be very challenging and inefficient for the programmer to work out the correlation and describe it in programming language. It is also difficult for the programmer to keep track of the new data obtained during ongoing operation and to fine tune the correlation and improve the performance of the program. According to embodiments of the present disclosure, the booking server 200 adopts machine learning algorithms 220 which are able to learn from the historical data and predict the likelihood of the outcomes. The machine learning algorithms 220 will also be able to continuously improve the accuracy and efficiency of the predicted outcome with training by subsequent data. Further details of the machine learning algorithms 220 will be described with reference Figures 13-15.

After the likelihood that the user 901 finishes using resource is predicted in step 1020, the process then moves to step 1025 to check whether the predicted likelihood is above a predetermined first threshold value. In the event that the predicted likelihood is above the first threshold value, the process moves to step 1030 where the booking server 200 makes another prediction on the likelihood that sending a notification to the user 901 will result in a user feedback to release the resource. The predicted likelihood is then compared with a predetermined second threshold in step 1040. In the event that the predicted likelihood is above the second threshold value, the process moves to step 1045 where the booking server sends the notification over the network to ask the user 901 whether he or she would like to keep or release the booking.

However, in the event that the predicted likelihood that the user 901 has finished using the resource is below the first threshold value, or the predicted likelihood that the sending a notification to the user 901 will result in release of resource is below the second threshold value, the process moves to 1035, where the booking server 200 will check again the status of the resource after a predetermined period of time. If the user 901 still has not returned to the resource, the process moves to step 1020 where another prediction of the user feedback based on the updated conditions, for example, the new wait time and new user location.

In embodiments, the first threshold value and the second threshold value may be assigned with a default value. For instance, for predicted likelihoods in steps 1020 and 1030 within the range of 0 and 1, the first threshold value and the second threshold value may be assigned with a default value 0.5. The threshold values may be further fine-tuned based on various factors including the characteristics of the relevant users and resources.

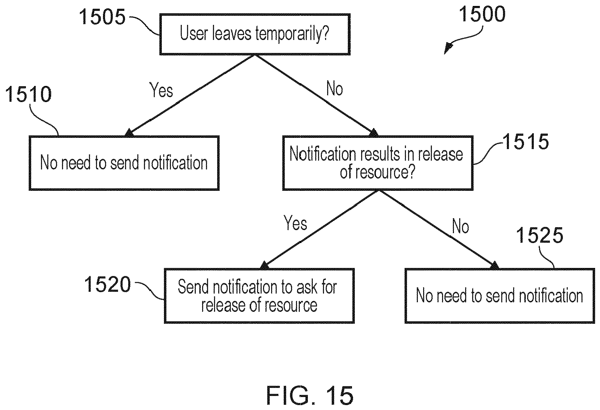

Although Figure 10 shows machine learning algorithms that output a likelihood score for user feedback, it is envisaged that the machine learning algorithms may be a predictive model which outputs a class label for the predicted outcome, for example, user leaves temporarily, or notification results in release of resource. Examples of predictive models that output class labels will be described later with reference to Figure 15.

Returning to step 1045, after sending the notification to the user 901 over the network, the process proceeds to step 1050 where feedback is received from the user device 300 over the network in response to the notification. In the event that the feedback is to release the booking, the process proceeds to step 1055 and the booking server 200 will release the resource and update the Office Resource Database and User Database. The user feedback and corresponding conditions under which the notification was sent will be stored in the historical data storage 500.

Returning to step 1050, in the event that the feedback is to keep the booking or the notification is ignored by the user 901, the user feedback and corresponding conditions under which the notification was sent will be stored in the historical data storage. The process then moves to step 1060 where the booking server 200 checks whether the reservation period has expired. In the event that the reservation has expired, the process moves to step 1065, where the booking server 200 automatically releases the resource. In alternative embodiments, in step 1060, the booking server 200 checks additionally whether a predetermined period of time, for instance 20 minutes, has passed since the resource has been unoccupied. If the predetermined period of time has passed, the booking system releases the resource automatically release the resource even the reservation period has not expired.

In embodiments, the process determines in step 1050 whether the user responds to keep the booking, in which case the process proceeds to step 1060. If the process determines in step 1050 that the user responds to release the resource or to ignore the notification, the process proceeds to step 1055 where the booking server 200 will release the resource immediately or after a predetermined period of time.

Returning to step 1060, in the event that the reservation period has not expired, the process moves to step 1035. In step 1035, as already described above, the booking server 200 checks again the status of the resource after a predetermined period of time. If the user 901 still has not returned to the resource, the process moves to step 1020 where another prediction of the user feedback based on the updated conditions, for example, the new wait time and new user location.

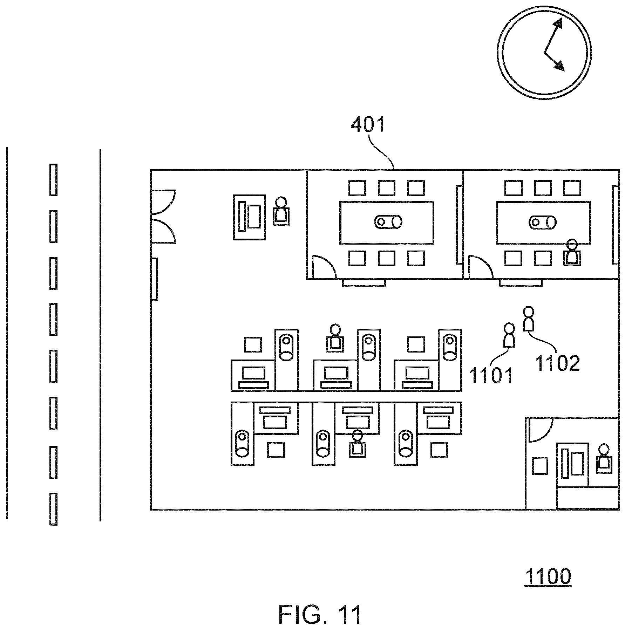

Figure 11 illustrates a temporary leave scenario that may be encountered by the booking management system 100 according to embodiments of the disclosure. User 1101 booked a meeting room 401 for a meeting with user 1102 for the period 2:00 p.m. to 6:00 p.m. Before the end of the reservation period, users 1101, 1102 leave the meeting room 401 at 4:00 p.m. to take a 15-minute break. At 4:05 p.m., the resource management system 100 detects through the sensors 101-103 that the meeting room has become unoccupied and determines whether to send notifications over the network to user 1101 to ask for early release of the meeting room 401.

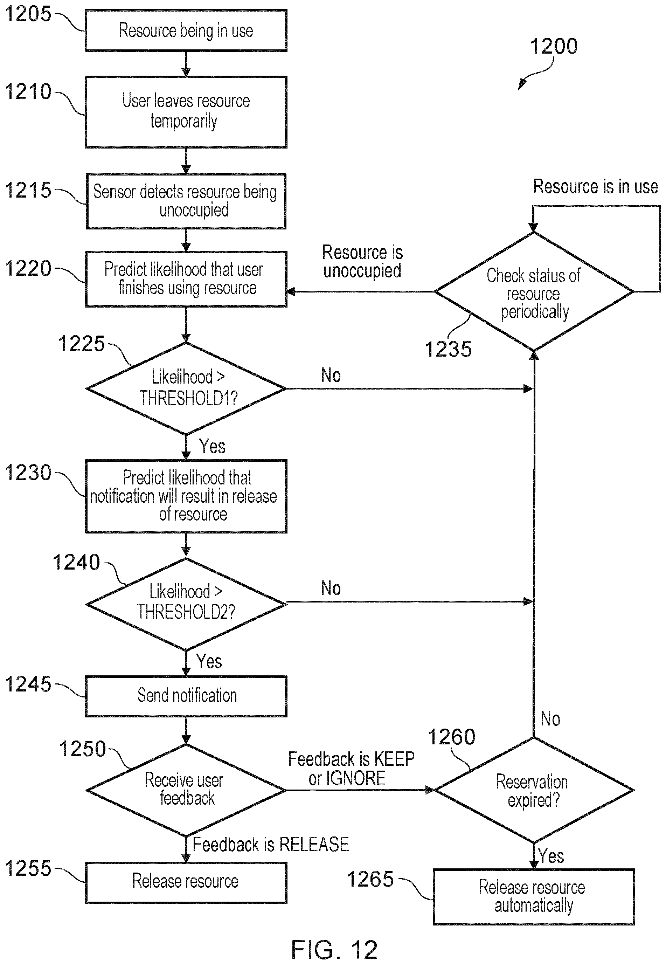

Figure 12 illustrates a flow chart describing a notification process implemented by the booking management system 100 according to embodiments of the disclosure for handling the scenario of Figure 11. The process 1200 starts in step 1205. The process 1200 will be started by a user initiating a booking feature of the software application stored in the device storage 315. A request for booking is sent by the user device 300 and is received by the booking server 200 over the network. The resource is then scheduled according to the request. The Office Resource Database and the User Database are updated. Specifically, the office resource is booked for the predetermined time.

The process then moves to step 1210 where the reservation time has arrived and user 1101 checks in the resource. User 1101 then leaves the meeting room for a break and goes to the pantry for a coffee. The process moves to step 1215 where the sensors 101-103 of the booking management system 100 detects the resource is unoccupied. The booking server needs to determine whether to send a notification over the network to the organizer reminding him to release the resource early.

The decision process involves predicting in step 1230 the likelihood that sending the notification to user 1101 in the given situation will result in a response to release the resource. According to embodiments of the disclosure, the decision process further includes firstly predicting the likelihood that user 1101 has finished using the resource, which is performed in step 1220.

The foregoing prediction can be performed by taking account of the historical data of user feedback and conditions stored in historical data storage 500. In the example of user 1101, the booking server may predict that a notification will not successfully cause the user to release the work space, based on his or her current location which is in the pantry of the office and staying with the other user 1102 of the meeting room.

In embodiments of the present disclosure, statistical analysis can be performed on the historical data to obtain the average wait time that user 1101 released previous bookings. If the current wait time is longer than the average time, it will be predicted by the booking server 200 that sending a notification will successfully cause user 1101 to release the resource. In examples of the embodiments, the average duration that user 1101 temporarily left a resource without actually finishing the use of the resource may be obtained to predict whether user 1101 in the current situation has finished using the resource. In embodiments of the disclosure, apart from the time the resource has been unoccupied and the duration of temporarily leaving the resource, the booking server 200 may also consider other factors listed below, although the disclosure is not so limited:
- the time the resource has been used since reservation period started;
- the number of users that will use the resource;
- the day and time of day for the reservation;
- location of the resource;
- type of the resource;
- metadata associated with the resource;
- capacity of the office resource;
- accessibility considerations;
- priority of the usage of the resource;
- organization the user belongs to;
- role of the user in the organization;
- whether virtual meeting is being held;
- the number of times and durations the resource has been made unoccupied previously during the current reservation time;
- the location of the user at the time when the current notification was sent, which may be contextual location information such as in another meeting room, in a coffee area, in a restroom area);
- the location of the user at the time when the previous notification was sent;
- the distance of the user from the resource when the current notification was sent;
- the moving direction of the user with respect to the resource when the current notification was sent, for example, moving away from, moving towards or being stationary;
- the state of the user's devices when the current notification was sent, for instance, screen on, screen off, active application, or on a call;
- the feedback received from the user in response to the current notification;
- the feedback received from the user in response to the previous notification; and
- the information about another user having requested for release of the resource.

Since the correlation between these factors and the outcome (user feedback in response to the notification) is complicated, it would be very challenging and inefficient for the programmer to work out the correlation and describe it in programming language. According to embodiments of the present disclosure, the booking server 200 adopts machine learning algorithms 220 which are able to learn from the historical data and predict the likelihood of the outcomes. The machine learning algorithms 220 will also be able to continuously improve the accuracy and efficiency of the predicted outcome with training by subsequent data. Further details of the machine learning algorithms 220 will be described with reference Figures 13-15.

After the likelihood that user 1101 finishes using resource is predicted in step 1020, the process then moves to step 1225 to check whether the predicted likelihood is above a predetermined first threshold value. In the event that the predicted likelihood is above the first threshold value, the process moves to step 1230 where the booking server 200 makes another prediction on the likelihood that sending a notification to user 1101 will result in a user feedback to release the resource. The predicted likelihood is then compared with a predetermined second threshold in step 1240. In the event that the predicted likelihood is above the second threshold value, the process moves to step 1245 where the booking server 200 sends the notification over the network to ask user 1101 whether he or she would like to keep or release the booking.

However, in the event that the predicted likelihood that user 1101 has finished using the resource is below the first threshold value, or the predicted likelihood that the sending a notification to user 1101 will result in release of resource is below the second threshold value, the process moves to 1235, where the booking server 200 will check again the status of the resource after a predetermined period of time. If user 1101 still has not returned to the resource, the process moves to step 1220 where another prediction of the user feedback based on the updated conditions, for example, the new wait time and new user location.

In embodiments, the first threshold value and the second threshold value may be assigned with a default value. For instance, for predicted likelihoods in steps 1225 and 1240 within the range of 0 and 1, the first threshold value and the second threshold value may be assigned with a default value 0.5. The threshold values may be further fine-tuned based on various factors including the characteristics of the relevant users and resources.

Although Figure 12 shows machine learning algorithms that output a likelihood score for user feedback, it is envisaged that the machine learning algorithms may be a predictive model which outputs a class label for the predicted outcome, for example, user leaves temporarily, or notification results in release of resource. Examples of predictive models that output class labels will be described later with reference to Figure 15.

Returning to step 1245, after sending the notification over the network to user 1101, the process proceeds to step 1250 where feedback is received from the user device 300 over the network in response to the notification. In the event that the feedback is to release the booking, the process proceeds to step 1255 and the booking server 200 will release the resource and update the Office Resource Database and User Database. The user feedback and corresponding conditions under which the notification was sent will be stored in historical data storage 500.

Returning to step 1250, in the event that the feedback is to keep the booking or the notification is ignored by user 1101, the user feedback and corresponding conditions under which the notification was sent will be stored in historical data storage 500. The process then moves to step 1260 where the booking server 200 checks whether the reservation period has expired. In the event that the reservation has expired, the process moves to step 1265, where the booking server 200 automatically releases the resource. In embodiments, in step 1260, the booking server 200 checks additionally whether a predetermined period of time, for example 20 minutes, has passed since the resource has been unoccupied. If the predetermined period of time has passed, the booking system releases the resource automatically release the resource even the reservation period has not expired.

In embodiments, the process determines in step 1250 whether the user responds to keep the booking, in which case the process proceeds to step 1260. If the process determines in step 1250 that the user responds to release the resource or to ignore the notification, the process proceeds to step 1255 where the booking server 200 will release the resource immediately or after a predetermined period of time.

Returning to step 1260, in the event that the reservation period has not expired, the process moves to step 1235. In step 1235, as already described above, the booking server 200 checks again the status of the resource after a predetermined period of time. If user 1101 still has not returned to the resource, the process moves to step 1220 where another prediction of the user feedback based on the updated conditions, for example, the new wait time and new user location. In the event that user 1101 subsequently returns to the resource, the process remains in step 1235 and periodical checking of the resource status will be conducted. If user 1101 later leaves the resource again, it will be detected by the sensors 101-103 of the booking management system 100 and the process will continue to step 1220 as previously described.

Figure 13 illustrates a database structure for historical data storage 500 in Figure 1 which is, in embodiments, a database. As previously described, the historical data may be used for predictive analysis, such as statistical analysis or for training of machine learning algorithms 220 according to embodiments of the disclosure.

Referring to historical data storage, a number of parameters associated with each user is stored in association with the respective user's behaviour in responding a notification which asks for early release of booking. In embodiments, this may include information such as: the user name or user ID for identifying the user; the role of the user in the organization; the resource booked by the user; the reservation time of the resource; the unoccupied time when the relevant notification was sent to the user; the location of the user at the time when the notification was sent; the location of the user at the time when the previous notification (if any) was sent; and the feedback received from the user. In embodiments of the disclosure, the historical data storage may additionally store the following information, although the disclosure is not so limited:
- the time the resource has been used since reservation period started;
- the number of users that will use the resource;
- the day and time of day for the reservation;
- location of the resource;
- type of the resource;
- metadata associated with the resource;
- capacity of the office resource;
- accessibility considerations;
- priority of the usage of the resource;
- organization the user belongs to;
- role of the user in the organization;
- actual response received as a result of previous notifications for the office resource;
- whether virtual meeting is being held;
- the number of times and durations the resource has been made unoccupied previously during the current reservation time;
- the location of the user at the time when the current notification was sent, which may be contextual location information such as in another meeting room, in a coffee area, in a restroom area);
- the location of the user at the time when the previous notification was sent;
- the distance of the user from the resource when the current notification was sent;
- the moving direction of the user with respect to the resource when the current notification was sent, for example, moving away from, moving towards or being stationary;
- the state of the user's devices when the current notification was sent, for instance, screen on, screen off, active application, or on a call;
- the feedback received from the user in response to the current notification;
- the feedback received from the user in response to the previous notification; and
- the information about another user having requested for release of the resource.

By factoring in the data in association with the historical behaviour of the user with respect to release of various office resources, the booking server 200 is able to perform analysis based on the current conditions, and particularly by utilizing machine learning algorithms 220, to predict the likelihood of the future user behaviour. For example, for a user who tends to release a booking only when a notification is sent, the behaviour could be reflected from information in the database such as the time when a notification was sent which resulted in a positive feedback from the user to release the booking.

In embodiments, the machine learning algorithms 220 are initially trained by selected data stored in the historical data storage in association with the behaviour of the user to maximize the success metrics in relation to the user feedback. The success metrics may comprise one or more of the followings although the disclosure is not so limited:
- the number of office resources released
- the percentage of notifications that result in release of office resources

The machine learning algorithms 220 may continue to iterate its learning based on the data and feedback from the user acquired by the booking management system 100 during ongoing operations and continuously optimize the performance to maximize the success metrics.

According to embodiments of the disclosure, the machine learning algorithms 220 adopted by the booking management system 100 may be the same for all users and/or office resources which allows efficient training and maintenance of the machine learning algorithms 220.

In alternative embodiments, the machine learning algorithms 220 may be split up per user group and/or office resource group based on information such as the location or organization of the users, and location and nature of the office resources. By having different machine learning algorithms 220 handling the prediction for individual user groups and/or office resource groups, the machine learning algorithms 220 may be trained with different data sets specific for the relevant user groups and/or office resource groups. The training and maintenance of the machine learning algorithms 220 may become more complicated, nevertheless the resulting prediction generated by the machine learning algorithms 220 will be more accurate based on the specific information of that particular user group and/or office resource group. The booking management system 100 adopting tailored machine learning algorithms 220 for user groups and/or office resource groups will therefore be able to determine the conditions for sending notifications which have a higher likelihood of resulting in a user feedback to release the booking.

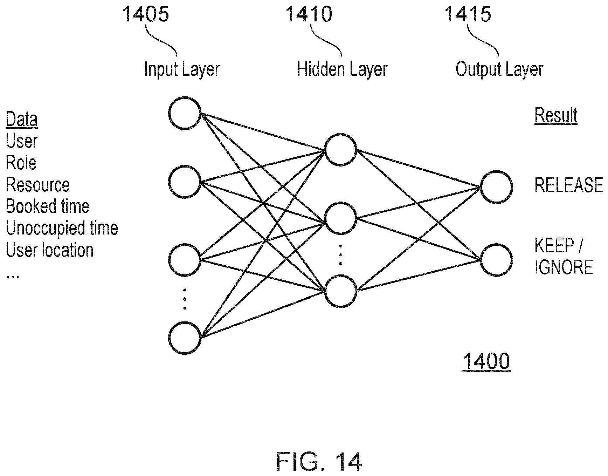

Figure 14 illustrates an exemplary neural network of the machine learning algorithms 220 according to embodiments of the disclosure. In embodiments, the neural network 1400 comprises an input layer of nodes 1405, a hidden layer of nodes 1410 and an output layer of nodes 1415. Although one hidden layer is shown in Figure 14, it is envisaged that the neural network may include a number of hidden layers. The data stored in the historical data storage 500 as described in Figure 13 is fed into neural network model 1400 to perform training. Once the training has been done, the booking server 200 can utilize the neural network model 1400 for predicting outcome, for example, whether a notification will result in a user feedback to release a booked resource.

Figure 15 illustrates an exemplary decision tree model of the machine learning algorithms 220 according to embodiments of the disclosure. In embodiments, the decision tree model 1500 performs the decision process by breaking down into multiple decision nodes. For example, in order to predict whether sending a notification to a user will result in user feedback to release a booking, the decision tree 1500 may firstly predict in node 1505 whether the user leaves the resource temporarily or the user has finished using the resource. In the event that decision node 1505 estimates that the user leaves the resource temporarily, the decision tree model 1500 proceeds to decision node 1510, where it is decided that there is no need to send a notification under the given conditions. On the other hand, if the decision node 1505 estimates that the user has finished using the resource in decision node 1505, the decision tree model1 1500 moves to decision node 1515 to estimate whether sending a notification after the user finished using the resource will release of resource will result in user feedback to release the resource. If the estimated user feedback is to release the resource, the decision tree model 1500 proceeds to decision node 1520 and a notification is sent to the user to ask for early release of the resource. In the event that the estimated user feedback is to keep the resource or to ignore the notification, the decision tree model 1500 proceeds to decision node 1525, where it is decided that there is no need to send a notification under the given conditions.

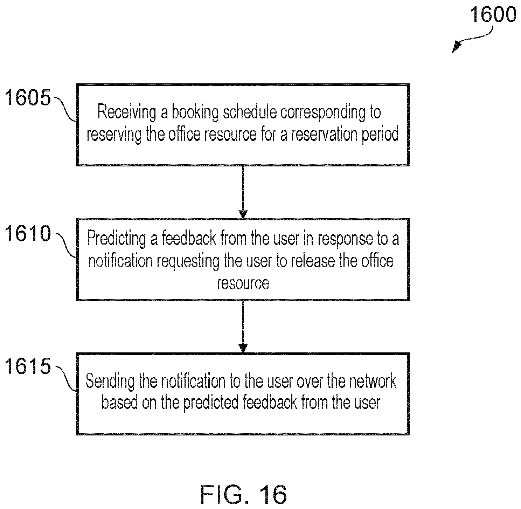

Figure 16 is a flowchart describing a computerized process 1600 for managing booking of an office resource according to embodiments of the disclosure. Process 1600 may begin at step 1605, where the booking management system 100 may receive a booking schedule corresponding to reserving the office resource for a reservation period. In some embodiments, the booking schedule may be maintained by a calendar system which receive, from a user, a request for reserving the office resource for a reservation period over network. A request for booking may include the identity and type of the office resource, the reservation period, the list of attendees and the list of required facilities.

In some embodiments, the booking schedule may be maintained by the booking management system 100. The request may be sent by the user from the user device 300 and may be received by the booking server 200 through a wired or wireless network. Examples of office resource types may include work spaces, meeting rooms, collaboration areas, phone booths, laboratory benches, resting rooms, staff break rooms, reception areas, and desks. The booking management system 100 may schedule the office resource according to the request. For example, the booking server 200 may check the Office Resource Database for the availability of the requested office resource and update the Office Resource Database and User Database, if the resource is available for reservation, based on the requested booking period. The booking server 200 may confirm the user and the attendees after the booking has been scheduled. The booking server 200 may also send reminders to the user and the attendees at a predetermined time, for instance 30 minutes, before the schedule period.

At step 1610, the booking management system 100 may predict a feedback from the user in response to a notification requesting the user to release the office resource. For example, when the office resource is unoccupied during the booking period, the booking server 200 may predict the user's response whether to keep or release the office resource if a notification is sent. The booking server 200 may predict the likelihood that sending a notification to the user will result in release of the office resource, and subsequently determine that the predicted feedback from the user is to release the office resource if the predicted likelihood of release of the office resource is above a threshold. The booking server 200 may also predict the likelihood that the user will ignore the notification. The prediction may be performed by statistical analysis of historical data in association with the past booking behaviour of a user group or an individual user. The prediction may also be performed by machine learning algorithms 220 trained by historical data in association with the past booking behaviour of a user group or an individual user. The machine learning algorithms 220 may be trained to maximize the success metrics comprising one or more of the followings: the number of resources released, and percentage of notifications that result in a release. The machine learning algorithms 220 may include predictive models such as artificial neural networks, decision tree models, linear regression models, or other models for classification and regression analyses.

At step 1615, the booking management system 100 may send the notification to the user over the network based on the predicted feedback from the user, for instance, when the predicted feedback from the user is to release the office resource. The booking server 200 may send the notification to the user device 300 through a wired or wireless network. The notification may take different forms depending on the predicted likelihood of a user feedback to release. For example, if the probability that the user will release the resource is above a predetermined threshold, the notification may be a message containing the booking details and may be accompanied with an audio alert signal to draw the attention of the user; on the other hand, if the probability that the user will release the resource is below the predetermined threshold, the notification may be a short pop-up message which disappears after a period of time to minimize the disturbance caused to the user.

By predicting a feedback from the user in response to a notification requesting the user to release the office resource, and determining whether to send the notification to the user over the network based on the predicted feedback, the booking management system 100 according to the disclosure is capable of sending reminder notifications with higher success rate of getting positive response from the user to confirm release of the booking. In addition to minimizing disturbance caused to the users, the booking management system 100 also allows more efficient use of network resources through reducing unnecessary network traffic due to notifications that have a high likelihood of resulting in responses to keep the booking or being ignored. The arrangement according to the present disclosure also reduces unnecessary data processing and memory storage for handling and recording the unsuccessful notifications, leading to more efficient use of computing resources in the booking server 200 and user devices 300.

Numerous modifications and variations of the present disclosure are possible in light of the above teachings. It is therefore to be understood that within the scope of the appended claims, the disclosure may be practiced otherwise than as specifically described herein.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent embodiments of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

Embodiments of the present technique can generally be described by the following numbered clauses:
1. A method for managing booking of an office resource, comprising the steps of:
   receiving a booking schedule corresponding to reserving the office resource for a reservation period;
   predicting a feedback from the user in response to a notification requesting the user to release the office resource; and
   sending the notification to the user over the network based on the predicted feedback from the user.
2. The method according to clause 1, wherein the notification is sent to the user over the network if the predicted feedback from the user is to release the office resource.
3. The method according to clause 2, wherein the step of predicting the feedback from the user further comprises:
   predicting the likelihood that sending a notification to the user will result in release of the office resource; and
   determining that the predicted feedback from the user is to release the office resource if the predicted likelihood of release of the office resource is above a threshold.
4. The method according to clause 1, further comprising the steps of:
   receiving a feedback from the user in response to the notification; and
   releasing the office resource according to the feedback.
5. The method according to any of clauses 1-4, further comprising the step of periodically evaluating the likelihood of release when the reserved office resource is unoccupied during the reservation period.
6. The method according to any of clauses 1-5, further comprising the step of automatically releasing the office resource when the office resource has been unoccupied for a time period.
7. The method according to clauses 1-5, further comprising the step of storing information associated with the office resource reservation in the database, wherein the information comprises at least one of:
   the time the office resource has been used since reservation period started;
   the time the office resource has been unoccupied;
   the number of users that will use the office resource;
   the day and time of day for the reservation;
   location of the office resource;
   type of the office resource;
   metadata associated with the office resource;
   capacity of the office resource;
   accessibility considerations;
   priority of the usage of the office resource;
   the identification of the user;
   organization the user belongs to;
   role of the user in the organization;
   actual response received as a result of previous notifications for the office resource;
   whether virtual meeting is being held;
   the number of times and durations the resource has been made unoccupied previously during the current reservation time;
   the location of the user at the time when the current notification was sent;
   the location of the user at the time when the previous notification was sent;
   the distance of the user from the resource when the current notification was sent;
   the moving direction of the user with respect to the resource when the current notification was sent;
   the state of the user's devices when the current notification was sent;
   the feedback received from the user in response to the current notification;
   the feedback received from the user in response to the previous notification; and
   the information about another user having requested for release of the resource.
8. The method according to clause 7, wherein the feedback from the user is predicted by performing statistical analysis based on the information stored in the database.
9. The method according to clause 7, wherein the feedback from the user is predicted by using a machine learning algorithm trained by the information stored in the database.
10. The method according to clause 9, wherein the machine learning algorithm comprises a decision tree.
11. The method according to clause 10, wherein the decision tree comprises the decision nodes of:
   determining the likelihood that the user does not need the office resource; and
   determining the likelihood that sending a notification to the user will result in release of the office resource.
12. The method according to clause 9, wherein the machine learning algorithm comprises a linear regression model.
13. The method according to clause 9, wherein the machine learning algorithm comprises a classification model.
14. The method according to clause 9, wherein the machine learning algorithm comprises a neural network.
15. The method according to any preceding clause, wherein the office resource is selected from the group comprising: work spaces, meeting rooms, collaboration areas, phone booths, laboratory benches, resting rooms, staff break rooms, reception areas and desks.
16. The method according to any preceding clause, wherein the notification provides information comprising at least one of:
   the reservation period for the office resource;
   the time the office resource has been unoccupied;
   attendees that will also use the office resource;
   identification of the office resource;
   location of the office resource;
   type of the office resource; and
   the information about another user having requested for release of the resource.
17. A computer program product comprising computer readable instructions which, when loaded onto a computer, configure the computer to perform a method according to any preceding clause.
18. An apparatus for managing booking of an office resource, comprising circuitry configured to:
   receive a booking schedule corresponding to reserving the office resource for a reservation period;
   predict a feedback from the user in response to a notification requesting the user to release the office resource; and
   send the notification to the user over the network based on the predicted feedback from the user.
19. The apparatus according to clause 18, wherein the notification is sent to the user over the network if the predicted feedback from the user is to release the office resource.
20. The apparatus according to clause 18, wherein the circuitry is configured so that the step of predicting the feedback from the user further comprises:
   predicting the likelihood that sending a notification to the user will result in release of the office resource; and
   determining that the predicted feedback from the user is to release the office resource if the predicted likelihood of release of the office resource is above a threshold.
21. The apparatus according to clause 18, wherein the circuitry is configured to:
   receive a feedback from the user in response to the notification; and
   release the office resource according to the feedback.
22. The apparatus according to any of clauses 18-21, wherein the circuitry is further configured to periodically evaluate the likelihood of release when the reserved office resource is unoccupied during the reservation period.
23. The apparatus according to any of clauses 18-22, wherein the circuitry is further configured to automatically release the office resource when the office resource has been unoccupied for a time period.
24. The apparatus according to any of clauses 18-22, wherein the circuitry is further configured to store information associated with the office resource reservation in the database, wherein the information comprises at least one of:
   the time the office resource has been used since reservation period started;
   the time the office resource has been unoccupied;
   the number of users that will use the office resource;
   the day and time of day for the reservation;
   location of the office resource;
   type of the office resource;
   metadata associated with the office resource;
   capacity of the office resource;
   accessibility considerations;
   priority of the usage of the office resource;
   the identification of the user;
   organization the user belongs to;
   role of the user in the organization;
   actual response received as a result of previous notifications for the office resource;
   whether virtual meeting is being held;
   the number of times and durations the resource has been made unoccupied previously during the current reservation time;
   the location of the user at the time when the current notification was sent;
   the location of the user at the time when the previous notification was sent;
   the distance of the user from the resource when the current notification was sent;
   the moving direction of the user with respect to the resource when the current notification was sent;
   the state of the user's devices when the current notification was sent;
   the feedback received from the user in response to the current notification;
   the feedback received from the user in response to the previous notification; and
   the information about another user having requested for release of the resource.
25. The apparatus according to clause 24, wherein the feedback from the user is predicted by performing statistical analysis based on the information stored in the database.
26. The method according to clause 24, wherein the feedback from the user is predicted by using a machine learning algorithm trained by the information stored in the database.
27. The method according to clause 9, wherein the machine learning algorithm comprises a decision tree.
28. The method according to clause 10, wherein the decision tree comprises the decision nodes of:
   determining the likelihood that the user does not need the office resource; and
   determining the likelihood that sending a notification to the user will result in release of the office resource.
29. The apparatus according to clause 26, wherein the machine learning algorithm comprises a linear regression model.
30. The apparatus according to clause 26, wherein the machine learning algorithm comprises a classification model.
31. The apparatus according to clause 26, wherein the machine learning algorithm comprises a neural network.
32. The apparatus according to any of clauses 18-31, wherein the office resource is selected from the group comprising: work spaces, meeting rooms, collaboration areas, phone booths, laboratory benches, resting rooms, staff break rooms, reception areas and desks.
33. The apparatus according to any of clauses 18-31, wherein the notification provides information comprising at least one of:
   the reservation period for the office resource;
   the time the office resource has been unoccupied;
   attendees that will also use the office resource;
   identification of the office resource;
   location of the office resource;
   type of the office resource; and
   the information about another user having requested for release of the resource.

## Claims

1. A method for managing booking of an office resource, comprising the steps of:
receiving a booking schedule corresponding to reserving the office resource for a reservation period;
predicting a feedback from the user in response to a notification requesting the user to release the office resource;
sending the notification to the user over the network based on the predicted feedback from the user; and
periodically evaluating the likelihood of release when the reserved office resource is unoccupied during the reservation period.

2. The method according to claim 1, wherein the notification is sent to the user over the network if the predicted feedback from the user is to release the office resource.

3. The method according to claim 2, wherein the step of predicting the feedback from the user further comprises:
predicting the likelihood that sending a notification to the user will result in release of the office resource; and
determining that the predicted feedback from the user is to release the office resource if the predicted likelihood of release of the office resource is above a threshold.

4. The method according to claim 1, further comprising the steps of:
receiving a feedback from the user in response to the notification; and
releasing the office resource according to the feedback.

5. The method according to claim 1, further comprising the step of automatically releasing the office resource when the office resource has been unoccupied for a time period.

6. The method according to claim 1, further comprising the step of storing information associated with the office resource reservation in the database, wherein the information comprises at least one of:
the time the office resource has been used since reservation period started;
the time the office resource has been unoccupied;
the number of users that will use the office resource;
the day and time of day for the reservation;
location of the office resource;
type of the office resource;
metadata associated with the office resource;
capacity of the office resource;
accessibility considerations;
priority of the usage of the office resource;
the identification of the user;
organization the user belongs to;
role of the user in the organization;
actual response received as a result of previous notifications for the office resource;
whether virtual meeting is being held;
the number of times and durations the resource has been made unoccupied previously during the current reservation time;
the location of the user at the time when the current notification was sent;
the location of the user at the time when the previous notification was sent;
the distance of the user from the resource when the current notification was sent;
the moving direction of the user with respect to the resource when the current notification was sent;
the state of the user's devices when the current notification was sent;
the feedback received from the user in response to the current notification;
the feedback received from the user in response to the previous notification; and
the information about another user having requested for release of the resource.

7. The method according to claim 6, wherein the feedback from the user is predicted by performing statistical analysis based on the information stored in the database.

8. The method according to claim 6, wherein the feedback from the user is predicted by using a machine learning algorithm trained by the information stored in the database.

9. The method according to claim 8, wherein the machine learning algorithm comprises a decision tree.

10. The method according to claim 9, wherein the decision tree comprises the decision nodes of:
determining the likelihood that the user does not need the office resource; and
determining the likelihood that sending a notification to the user will result in release of the office resource.

11. The method according to claim 8, wherein the machine learning algorithm comprises any one of i) a linear regression model; ii) a classification model or iii) a neural network.

12. The method according to claim 1, wherein the office resource is selected from the group comprising: work spaces, meeting rooms, collaboration areas, phone booths, laboratory benches, resting rooms, staff break rooms, reception areas and desks.

13. The method according to claim 1, wherein the notification provides information comprising at least one of:
the reservation period for the office resource;
the time the office resource has been unoccupied;
attendees that will also use the office resource;
identification of the office resource;
location of the office resource;
type of the office resource; and
the information about another user having requested for release of the resource.

14. A computer program product comprising computer readable instructions which, when loaded onto a computer, configure the computer to perform a method according to any preceding claim.

15. An apparatus for managing booking of an office resource, comprising circuitry configured to:
receive a booking schedule corresponding to reserving the office resource for a reservation period;
predict a feedback from the user in response to a notification requesting the user to release the office resource;
send the notification to the user over the network based on the predicted feedback from the user; and
periodically evaluate the likelihood of release when the reserved office resource is unoccupied during the reservation period.
